# EUROPEAN PATENT APPLICATION

(11) **EP 4 491 299 A1**
(43) Date of publication of application: **15.01.2025**
(21) Application number: 23382724.5
(22) Date of filing: 14.07.2023
(51) Int. Cl.: B21K 1/76, B21J 15/12, B21J 13/02, B21K 21/10

(54) **METHOD FOR MANUFACTURING A CROSS GROOVE CONSTANT VELOCITY JOINT AND TOOLING FOR SAID METHOD**

(71) Applicant: Cie Automotive, S.A., 48009 Bilbao (Vizcaya) (ES)
(72) Inventor: NAJERA SERNA, Ander, 48009 BILBAO (Bizkaia) (ES); BARRAGAN GURIDI, Jon, 48009 BILBAO (Bizkaia) (ES)
(74) Representative: Herrero & Asociados, S.L.

(57) **Abstract**

Procedure for obtaining a cross-groove (PC) CV Joint (M) comprising a cold calibration (8) step in which a pressure element and a mold are used, aimed at forming and final profiling of the cross-groove (PC) of the CV Joint (M). The pressure element consists of a punch (11). In cold calibration (8), the punch (11) is pushed against the cup-shaped part obtained after forging (4), blasting (6) and lubrication (7) and placed on the mold. The invention proposes an alternative to the state of the art in which the final stage of obtaining the cup-shaped piece dispenses with the machining process, which normally finishes the cross-track profile (PC) and replaces it with the aforementioned cold calibration (8).

## Description

### Object of the invention

This invention is framed within the technical field of couplings for the transmission of rotational movements, more specifically in that of the extensible couplings by putting one of the coupling parts into a sleeve of the other coupling part and attached to it by sliding or rotating organs. The invention is also falls within the technical field of the constituent parts of forging machines, specifically in that of forging tooling.

The invention relates in particular to a procedure for obtaining a cross groove constant velocity (CV) joint, as well as to a forging tool required to carry out such procedure.

### Background of the invention

Within the automotive technical field, the joint is the part that contains the wheel hub or spindle and is attached to the suspension parts. Depending on the situation, it is usually called a constant velocity joint, outer race, boll, spindle, frame, or hub. The wheel and tire assembly are attached to the hub or spindle of the CV Joint, where the wheel rotates, while being held in a stable plane of motion by the stub axle/suspension assembly. There are joints of all sizes and shapes. Its design differs to adapt to all types of application and suspension.

Among the various types of joints, there are some of the types of homokinetic or Constant Velocity Joint, where an external body in the shape of a cup receives a second body inside, interacting and moving in the cup cavity by means of tracks. These tracks can be straight or crossed.

The current production process of cross groove CV joints comprises a first sequence of operations aimed at obtaining a final forging part, which is subsequently subjected to a second sequence of operations to give rise to the final joint. This second sequence is usually performed on the end customer of the product.

With the first sequence, the forging part, known as a revolution CV joint, is obtained. This first sequence comprises the following successive steps:
- reception and cutting of steel;
- induction heating;
- semi-hot forging in closed matrix;
- controlled cooling;
- shot blasting;
- visual inspection; and
- shipping of the final forging part.

In the second sequence of operations each and every one of the cross-tracks inside the revolution stub shaft are machined to obtain the final stub shaft. This second sequence comprises:
- soft machining;
- temper; and
- tracks rectification.

The first sequence of this process does not have a cold calibration stage, unlike the production of straight track stub shafts. This makes the second sequence necessary, where the forging part is roughed to form these tracks.

This presents several disadvantages, among which it is worth highlighting the time required for obtaining the stub shaft, the high cost in material and the high cost of machining.

Within the current state of the art, there are several documents related to procedures for obtaining joints. For example, document CN108838311A discloses a precision forging system for the development of external cups of cross-tracks belonging to a CV joint. For that purpose, the system uses a precision forging device that has a mold with a tapered guidepost surrounded by a set of printing punches where each segment has a surface in the shape of the track and recess where a spring keeps each segment in full contact with the guidepost.

Document WO2019138872A1 discloses a forging device for external elements of CV joints. The device has a mechanism to finish tracing cross-tracks on the external element, by using a segmented punch. The mechanism deposits the external element in a die and receives the punch by means of a press.

Document US5788578A is a system for making tracks in CV type joints that also proposes a tool for the calibration of these tracks by means of a segmented punch, where the gap between segments is destined to the contraction of the diameter of this at the time of removal.

All the documents mentioned refer to the elaboration of straight track stub shafts but not to cross-tracks. At this point, it should be emphasized that for the case of cross groove CV Joint achieving the complex geometry with conical ellipse forging that must be created is a limiting factor.

### Description of the invention

The first object of the invention is a procedure for obtaining a cross groove CV joint. The second object of the invention is a tool used in the procedure, more specifically a segmented expansive punch used in the cold calibration stage.

For the procedure, the invention proposes an alternative to the state of the art where the final stage of obtaining the part in the form of a cup dispenses the machining process, which finishes the profile of the tracks. Instead, the invention proposes the realization of a cold calibration with the use of a tool consisting of an expansive punch, where a negative of each track is housed in a segment of that punch. This punch is used in a cold calibration stage where the final profile of each cross-track of the cup body is achieved.

The procedure for obtaining a cross groove CV joint, therefore comprises the following stages:
- reception and cutting of steel;
- induction heating;
- semi-hot forging in closed matrix;
- controlled cooling;
- shot blasting;
- oiling;
- cold calibration;
- washing and visual inspection; and
- sending of the finished stub-shaft.

The steps from induction heating to cold calibration, both inclusive, are performed by a robot.

Thus, an already finished joint, without the need to perform the second sequence of operations that was mentioned before, with the consequent saving of time, materials and, in short, costs.

Some key features for the forging must be considered, such as the special geometry on the tracks to obtain. These have a conical-ellipse shape to avoid retentions in semi hot forging. The interior without retentions allows to forge the part with the same process used in other stub shafts with straight tracks. In addition, in the case of the cross-groove CV joint, the material transformation is greater than for those of straight tracks, due to its inner geometry. In the calibration of tracks not only the tracks are closed, but also an extrusion is made for the correct forming of the final part.

Another key feature of cold calibration is the expansive punch geometry. Cross groove CV joint require more flexible segments, since having a greater retentions than other stub shafts the displacement of these segments is greater for the correct removal of the part. The segments require a deformation of approximately 5-6 mm for the system to work correctly, while in other stub shafts the necessary deformation is usually about 2-3 mm.

The operation of the punch in the cold calibration is in such a way that when it is compressed against the inner face of the cup body, the negative of the tracks shapes each track in the piece, at the same time as due to the gap between segments (between 3-5 mm) in the removal of the punch, the wedge-shaped thrust bodies, when removed, allow the segment contraction, separating from the tracks and managing to extract the punch without causing damage. The punch also incorporates a notch that helps the deformation of each punch segment, reducing the risk of breakage during cold calibration operation.

With the punch geometry currently used in other stub-shaft, it was observed by finite element method (FEM) simulation that the maximum stresses exceeded the limit of the punch material, thus indicating the possibility of breakage in the tool.

### Description of drawings

To complement the description at stake and to provide a better understanding of the characteristics of the invention, in accordance with a preferred example of its practical realization, and as an integral part of this description there follows a set of drawings where, with an illustrative and non-limiting nature, the following representations were made:
Figure 1.- Shows a schematic view, in the form of a block diagram, of the procedure for obtaining the cross-groove CV joint.
Figure 2.- Shows a top perspective view of a cross groove CV joint obtained by the previous procedure.
Figure 3.- Shows a perspective view of an expansive punch used in the cold calibration procedure of the joint.

### Preferred embodiment of the invention

Helped by the above figures, there follows a detailed explanation of an example of preferred embodiment of the subject-matter of the present invention.

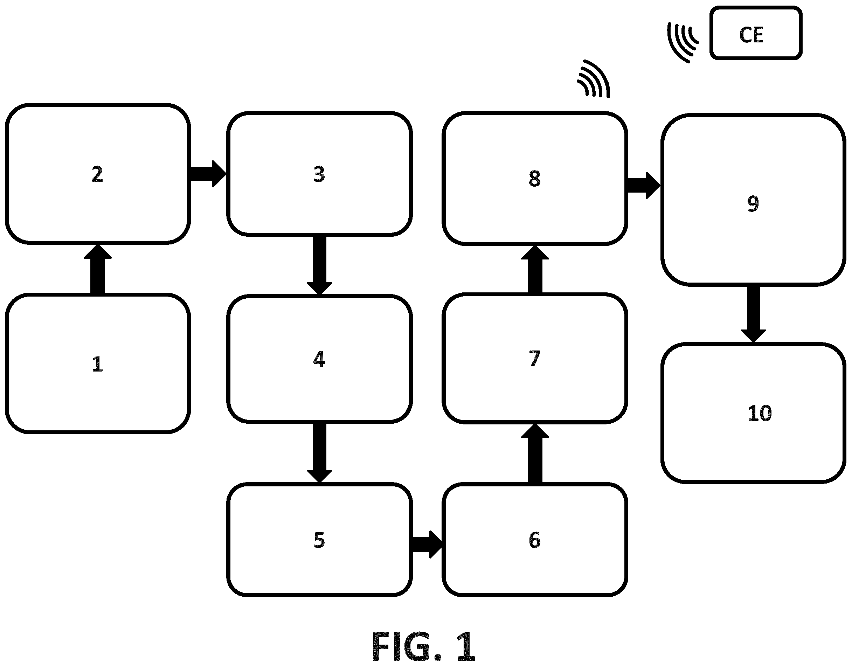

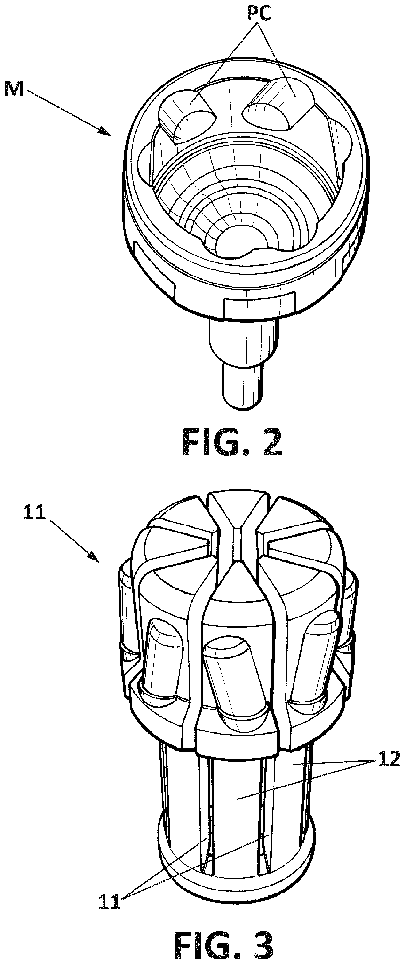

The procedure for obtaining a cross groove CV joint described herein is shown schematically in the form of a flow diagram in figure 1 and is intended to form a joint (M) with cross-tracks (PC) as illustrated in figure 2.

The procedure therefore comprises the following successive steps:
- reception (1) and cutting (2) of steel;
- heating (3) of steel;
- forging (4) semi-hot in closed matrix, for obtaining a cup-shaped piece;
- controlled cooling (5) of the piece;
- shot blasting (6) of the piece;
- lubrication (7) of the piece; and
- cold calibration (8) for the conformation of the cross-tracks (PC) inside the cup-shaped piece.

In this preferred embodiment the procedure is completed in its final stages with washing and visual inspection (9) of the piece and with the shipment (10) of the joint (M) once completed.

The steps from heating (3) to cold calibration (8), inclusive, are performed by a robot. This robot is governed by an external controller (CE), which controls these and all other stages of the procedure.

In the cold calibration (8) stage, a pressure element and a mold are used, aimed at forming and final profiling of the cross-tracks (PC) of the joint (M). The pressure element consists of a punch (11). In cold calibration (8), the punch (11) is pushed against the cup-shaped piece obtained after forging (4), blasting (6) and lubrication (7) and placed on the mold.

In the embodiment described herein the lubrication (7) step is carried out through an oiling procedure. As an alternative means, it can be performed by a phosphate or polymerization procedures.

In an alternative embodiment of the procedure, the steel is previously stud-shape cut, with which the cutting (2) step is not necessary.

Also, in this embodiment the steel heating (3) is performed by induction. Alternatively, such heating is done by chamber oven.

The punch (11), shown in figure 3, is of an expansive type and comprises at least one body divided into a plurality of segments (12) separated from each other by grooves (13), in such a way that each segment (12) collects the negative corresponding to the cross-track (PC) to be formed inside the cup-shaped piece.

To increase the flexibility of the segments (12), the punch (11) also includes an internal recess to obtain stresses below the yield limit. The incorporation of external recesses is also foreseen, which also contribute to an additional increase of the segments (12) flexibility.

For correct cold calibration (8) purposes the geometry of the punch (11) is key. The formation of the cross-tracks (PC) requires that some segments (12) be more flexible, since having a greater retention than other joints, the displacement of these segments (12) is greater for the correct extraction of the piece from the mold.

The segments (12), which have a 5-6 mm width, require an approximately 5-7 mm deformation for its correct operation, while in straight-track stub shafts the required deformation is usually about 2-3 mm.

The dimensions of the grooves (13) between segments (12) are also extended, which fall within the range of 3 to 6 mm. All this, together with the incorporation of the internal recess, give rise to a punch (11) that allows the formation of cross-tracks (PC) by cold calibration (8) without breaking or deformations in the punch (11) itself or in the joint (M).

## Claims

1. Procedure for obtaining a cross-track (PC) constant velocity joint (M) **characterized by** comprising the following successive steps:
- reception (1) of steel;
- heating (3) of steel;
- forging (4) semi-hot in closed matrix, for obtaining a cup-shaped piece;
- controlled cooling (5) of the piece;
- shot blasting (6) of the piece;
- lubrication (7) of the piece; and
- cold calibration (8) for the conformation of the cross-tracks (PC) inside the cup-shaped piece;
- wherein the steps of the procedure are governed by an external controller (EC); and
- wherein in the cold calibration (8) step a punch (11) for pressure and a mold for conformation and final profiling of the cross-tracks (PC) of the joint (M) are used.

2. Procedure according to claim 1 further comprising, after the cold calibration (8) step:
- washing and visual inspection (9) of the piece; and
- shipping (10) of the finished stub-shaft (M).

3. Procedure according to any of the previous claims wherein the lubrication (7) is carried out by oiling, phosphate, or polymerization procedures.

4. Procedure according to any of the previous claims wherein the steel heating (3) is performed by induction or by means of a chamber furnace.

5. Procedure according to any of the previous claims wherein a steel cut (2) is additionally made after reception (1) and prior to heating (3).

6. Punch (11) pressure for the performance of the cold calibration (8) step of the procedure according to any of claims 1-5 **characterized in that** it comprises at least one body with:
- a plurality of segments (12) with a 5-7 mm deformation range;
- grooves (13) between segments (12), with a 3-6 mm width range; and
- an internal recess for increased flexibility of segments (12).

7. Punch (11) according to claim 6 further comprising external cuts in segments (12) to increase its flexibility.
